# EUROPEAN PATENT APPLICATION

(11) **EP 4 768 323 A1**
(43) Date of publication of application: **01.07.2026**
(21) Application number: 25201501.1
(22) Date of filing: 10.09.2025
(51) Int. Cl.: B60L 58/18, B60L 58/19

(54) **VEHICLE CONNECTION CIRCUIT, VEHICLE CONNECTION METHOD, AND VEHICLE BATTERY STRUCTURE**

(30) Priority: 26.12.2024 JP 2024231125
(71) Applicant: TOYOTA JIDOSHA KABUSHIKI KAISHA, Toyota-shi, Aichi-ken 471-8571 (JP)
(72) Inventor: SHIMIZU, Yuki, TOYOTA-SHI, AICHI-KEN, 471-8571 (JP)
(74) Representative: Cabinet Beau de Loménie

(57) **Abstract**

A junction block (20) is interposed between a first battery (11) and a second battery (12), and a motor (40), and is configured to electrically connect the first battery (11), the second battery (12), and the motor (40). The junction block (20) includes: a first path (51); a second path (52); a third path (53); a positive-side system main relay (21); a wire (W10) that connects a point between the positive side of the first battery (11) and the positive-side system main relay (21) to the positive side of a DC-DC converter (62) and the positive side of an OBC (63); a negative-side system main relay (31); and a wire (W11) that connects the downstream side of the negative-side system main relay (31) to the negative side of the DC-DC converter (62) and the negative side of the OBC (63).

## Description

### BACKGROUND OF THE INVENTION

### 1. Field of the Invention

The present disclosure relates to vehicle connection circuits, vehicle connection methods, and vehicle battery structures.

### 2. Description of Related Art

Japanese Unexamined Patent Application Publication No. 2024-120972 (JP 2024-120972 A) describes a battery pack having a structure that can reduce electrical short-circuiting between a cathode-side device and an anode-side device by a simple configuration when an impact load is applied to the battery pack.

### SUMMARY OF THE INVENTION

There are cases where a vehicle equipped with a plurality of batteries is provided with a vehicle connection circuit (hereinafter also referred to as "junction block") that is connectable to the batteries. The junction block supports not only charging from a direct current (DC) inlet but also charging from an alternating current (AC) power supply and charging from a solar panel (hereinafter collectively referred to as "AC charging etc."). In such a case, providing dedicated relays on both the positive side and the negative side to support AC charging etc. leads to an increase in power consumption.

An object of the present disclosure is to provide a vehicle connection circuit, a vehicle connection method, and a vehicle battery structure that can support AC charging etc. while reducing power consumption in a vehicle equipped with a plurality of batteries.

A vehicle connection circuit of claim 1 is interposed between a first battery and a second battery, both provided in a vehicle and connectable to each other, and a direct current (DC) charger, a direct current-to-direct current (DC-DC) converter, an on-board charger, and a motor, and is configured to electrically connect the first battery, the second battery, and the motor. The vehicle connection circuit includes: a first path configured to charge the first battery from either or both of the DC-DC converter and the on-board charger; a second path configured to charge the second battery from either or both of the DC-DC converter and the on-board charger; a third path configured to charge the first battery and the second battery from either or both of the DC-DC converter and the on-board charger; a first system relay provided in the second path at a position closer to the motor than a branching point between the first path and the second path; a positive-side wire that connects a point between the positive side of the first battery and the first system relay to the positive side of the DC-DC converter and the positive side of the on-board charger, and that is isolated from a charging path of the DC charger; a second system relay provided on the positive-side wire; a third system relay provided in a portion where the first path, the second path, and the third path overlap, and adapted for switching between connection and disconnection of the charging path of the DC charger; and a negative-side wire that connects a downstream side of the third system relay to the negative side of the DC-DC converter and the negative side of the on-board charger.

The vehicle connection circuit of claim 1 can support AC charging etc. while reducing power consumption in a vehicle equipped with a plurality of batteries. In other words, the positive side of the DC-DC converter and the positive side of the on-board charger branch off at a point upstream of the first system relay, and the negative side of the DC-DC converter and the negative side of the on-board charger are connected to the downstream side of the third system relay. In other words, allowing the third system relay to serve the function of a negative-side system relay corresponding to the positive-side second system relay can eliminate the need for a negative-side system sub-relay. Therefore, voltage can be applied to a charging path using the single-polarity (positive-side) second system relay for one polarity (positive pole), thereby reducing power consumption.

According to a vehicle connection circuit of claim 2, in the vehicle connection circuit of claim 1, the vehicle connection circuit further includes a pre-charge circuit connected in parallel with the third system relay. The pre-charge circuit includes a limiting resistor and a fourth system relay connected in series.

In the vehicle connection circuit of claim 2, the capacitors of the DC-DC converter and the on-board charger can be pre-charged using the pre-charge circuit.

According to a vehicle connection circuit of claim 3, in the vehicle connection circuit of claim 1, the DC-DC converter is connected to a solar panel, and the on-board charger is connected to a wiring plug connector.

The vehicle connection circuit of claim 3 can support charging from a solar panel and charging from a wiring plug connector.

A vehicle connection method of claim 4 uses the vehicle connection circuit of any one of claims 1 to 3. The vehicle connection method includes closing the third system relay and subsequently closing the second system relay.

The vehicle connection method of claim 4 can reduce the electrical load at the time of activation of the second system relay.

A vehicle battery structure of claim 5 includes: a first battery; a second battery that is connectable to the first battery; and the vehicle connection circuit according to any one of claims 1 to 3 that is interposed between the first battery and the second battery, and the DC charger, the DC-DC converter, the on-board charger, and the motor, and that is configured to electrically connect the first battery, the second battery, and the motor.

The vehicle battery structure of claim 5 can support AC charging etc. while reducing power consumption in a vehicle equipped with a plurality of batteries.

As described above, according to the present embodiment, it is possible to support AC charging etc. while reducing power consumption in a vehicle equipped with a plurality of batteries.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing an example of the configuration of a vehicle battery structure mounted on a vehicle according to an embodiment;
FIG. 2 shows an example of a circuit configuration of the vehicle battery structure according to the embodiment;
FIG. 3 shows an example of the circuit configuration of the vehicle battery structure according to the embodiment;
FIG. 4 shows an example of the circuit configuration of the vehicle battery structure according to the embodiment; and
FIG. 5 shows an example of a drive sequence for pre-charging capacitors of a direct current-to-direct current (DC-DC) converter according to the embodiment.

### DETAILED DESCRIPTION OF EMBODIMENTS

Hereinafter, an exemplary embodiment for carrying out the technique of the present disclosure will be described in detail with reference to the drawings.

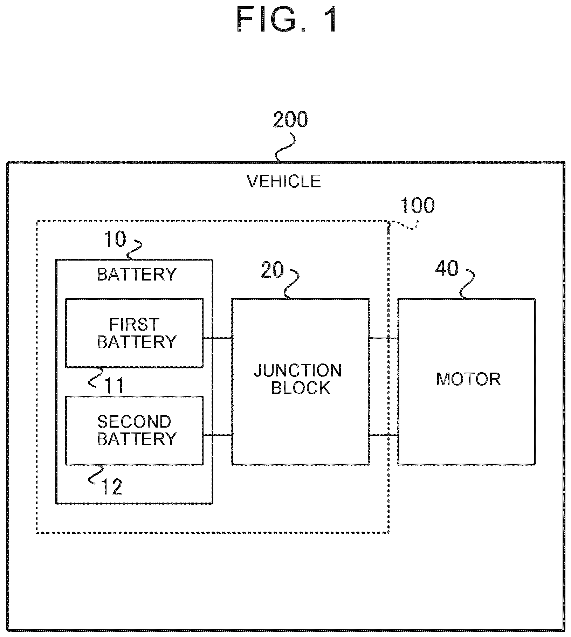

FIG. 1 is a block diagram showing an example of the configuration of a vehicle battery structure 100 mounted on a vehicle 200 according to the embodiment. As shown in FIG. 1, the vehicle 200 according to the present embodiment is equipped with the vehicle battery structure 100 and a motor 40 that drives the vehicle 200. The vehicle battery structure 100 includes a battery 10 and a junction block 20, and the battery 10 includes a first battery 11 and a second battery 12. The first battery 11 and the second battery 12 are connectable to each other. The junction block 20 is an example of a vehicle connection circuit. The junction block 20 is interposed between the first battery 11 and the second battery 12, and the motor 40, and electrically connects the first battery 11, the second battery 12, and the motor 40.

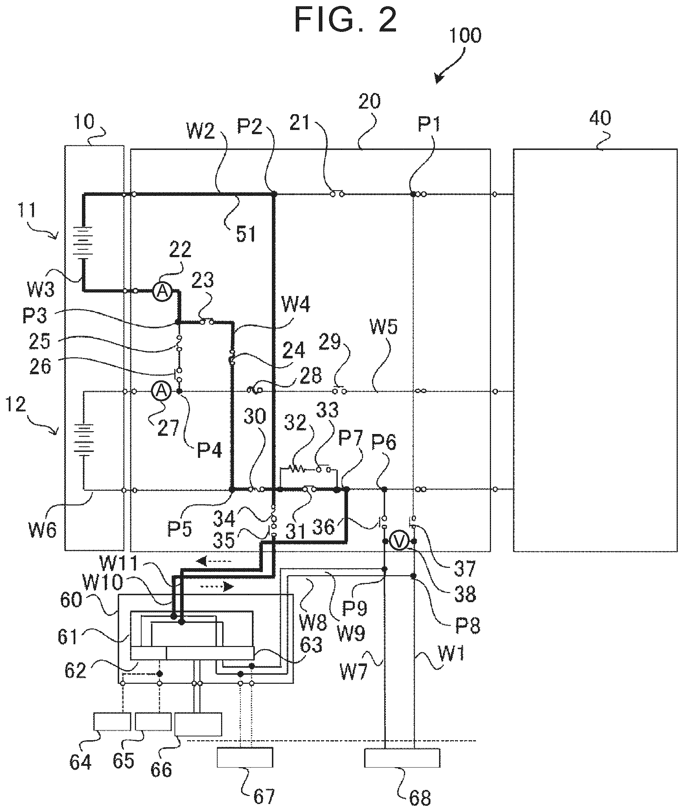

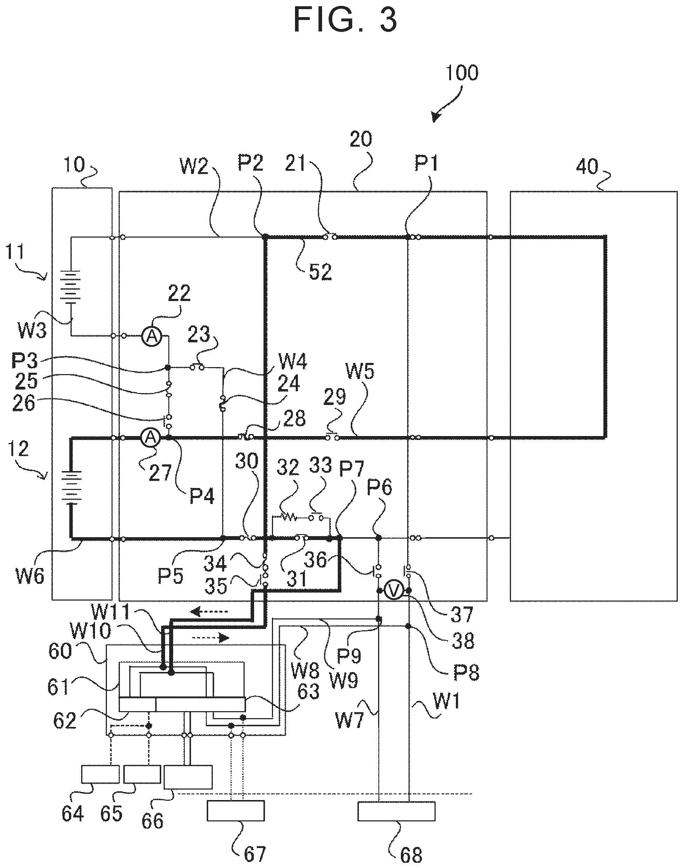

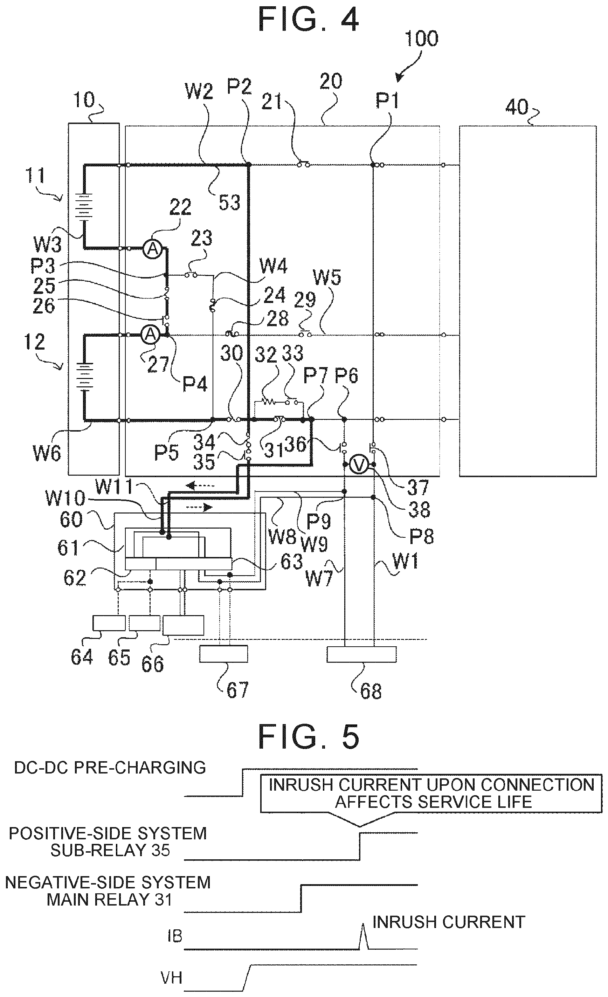

FIGS. 2 to 4 show an example of a circuit configuration of the vehicle battery structure 100 according to the present embodiment. The circuit configurations shown in FIGS. 2 to 4 are the same. FIG. 2 shows a first path 51 (bold line), FIG. 3 shows a second path 52 (bold line), and FIG. 4 shows a third path 53 (bold line). The dotted arrows in FIGS. 2 to 4 indicate the direction of current flow. The junction block 20 is interposed between the first battery 11 and the second battery 12, and a direct current (DC) inlet 68, a direct current-to-direct current (DC-DC) converter 62, and an on-board battery charger (OBC) 63.

As shown in FIGS. 2 to 4, when fast charging is performed using the DC inlet 68, the junction block 20 is connected to the DC inlet 68 for fast charging of the first battery 11 and the second battery 12. The DC inlet 68 is an example of a DC charger. On the other hand, when normal charging is performed using a 2-in-1 charger 60, the junction block 20 is connected, via the 2-in-1 charger 60, to a solar panel 64 and an auxiliary battery 65 for normal charging of the first battery 11 and the second battery 12. The junction block 20 may be connected, via the 2-in-1 charger 60, to a wiring plug connector 66 (so-called AC 100 V outlet) or an alternating current (AC) inlet 67 for charging of the first battery 11 and the second battery 12. The 2-in-1 charger 60 includes a filter 61, the DC-DC converter 62, and the OBC 63. The DC-DC converter 62 is connected to the solar panel 64 and the auxiliary battery 65, and converts a DC voltage supplied from the solar panel 64 and the auxiliary battery 65 into a predetermined DC voltage corresponding to the first battery 11 and the second battery 12. The OBC 63 is an example of an on-board charger. The OBC 63 is connected to the wiring plug connector 66 or the AC inlet 67, and converts an AC voltage supplied from the wiring plug connector 66 or the AC inlet 67 into a predetermined DC voltage corresponding to the first battery 11 and the second battery 12. The DC-DC converter 62 and the OBC 63 are connected to the junction block 20.

The junction block 20 includes a positive-side system main relay 21, a first current sensor 22, a first DC relay 23, a first fuse 24, a DC fuse 25, a second DC relay 26, a second current sensor 27, a second fuse 28, a third DC relay 29, a third fuse 30, a negative-side system main relay 31, a limiting resistor 32, a pre-charge-side system main relay 33, an AC fuse 34, a positive-side system sub-relay 35, a fourth DC relay 36, a fifth DC relay 37, and a voltage sensor 38. The positive-side system main relay 21 is an example of a first system relay, and the positive-side system sub-relay 35 is an example of a second system relay. The negative-side system main relay 31 is an example of a third system relay, and the pre-charge-side system main relay 33 is an example of a fourth system relay.

A first end of a wire W1 is connected to the positive side of the DC inlet 68, and a second end of the wire W1 is connected to a wire W2 at a contact point P1. A first end of the wire W2 is connected to the motor 40, and a second end of the wire W2 is connected to the positive side of the first battery 11. A first end of a wire W3 is connected to the negative side of the first battery 11, and a second end of the wire W3 is connected to a wire W5 at a contact point P4. A first end of a wire W4 is connected to the wire W3 at a contact point P3, and a second end of the wire W4 is connected to a wire W6 at a contact point P5. A first end of the wire W5 is connected to the motor 40, and a second end of the wire W5 is connected to the positive side of the second battery 12. A first end of the wire W6 is connected to the negative side of the second battery 12, and a second end of the wire W6 is connected to the motor 40. A first end of a wire W7 is connected to the negative side of the DC inlet 68, and a second end of the wire W7 is connected to the wire W6 at a contact point P6. A first end of a wire W8 is connected to the positive side of the OBC 63, and a second end of the wire W8 is connected to the wire W1 at a contact point P8. A first end of a wire W9 is connected to the negative side of the OBC 63, and a second end of the wire W9 is connected to the wire W7 at a contact point P9. A first end of a wire W10 is connected to the positive side of the DC-DC converter 62 and the positive side of the OBC 63, and a second end of the wire W10 is connected to the wire W2 at a contact point P2. A first end of a wire W11 is connected to the negative side of the DC-DC converter 62 and the negative side of the OBC 63, and a second end of the wire W11 is connected to the wire W6 at a contact point P7. The wire W10 is an example of a positive-side wire, and the wire W11 is an example of a negative-side wire.

The junction block 20 according to the present embodiment includes the first path 51 (shown by the bold line in FIG. 2), the second path 52 (shown by the bold line in FIG. 3), and the third path 53 (shown by the bold line in FIG. 4). The first path 51 is a path for charging the first battery 11 from either or both of the DC-DC converter 62 and the OBC 63 (AC charging etc.), and passes through the wires W10, W2, W3, W4, W6, W11. The second path 52 is a path for charging the second battery 12 from either or both of the DC-DC converter 62 and the OBC 63 (AC charging etc.), and passes through the wires W10, W2, the motor 40, and the wires W5, W6, W11. The third path 53 is a path for charging the first battery 11 and the second battery 12 from either or both of the DC-DC converter 62 and the OBC 63 (AC charging etc.), and passes through the wires W10, W2, W3, W5, W6, W11.

The positive-side system main relay 21 is disposed between the contact point P1 on the wire W1 and the contact point P2 on the wire W2, and switches between the first path 51 and the second path 52. The first current sensor 22 is disposed between the negative side of the first battery 11 and the contact point P3 on the wire W3, and measures a current flowing through the first path 51 or the third path 53. The first DC relay 23 is disposed between the contact point P3 on the wire W3 and the first fuse 24 on the wire W4, and switches between the first path 51 and the third path 53. The first fuse 24 is disposed between the first DC relay 23 and the contact point P5 on the wire W4. The DC fuse 25 is disposed between the contact point P3 and the second DC relay 26 on the wire W3. The second DC relay 26 is disposed between the DC fuse 25 and the contact point P4 on the wire W3, and switches between the first path 51 and the third path 53. The second current sensor 27 is disposed between the contact point P4 and the positive side of the second battery 12 on the wire W5, and measures a current flowing through the second path 52 or the third path 53. The second fuse 28 is disposed between the contact point P4 and the third DC relay 29 on the wire W5. The third DC relay 29 is disposed between the second fuse 28 and the motor 40 on the wire W5, and switches between the first path 51 and the second path 52. The third fuse 30 is disposed between the contact point P5 and the negative-side system main relay 31 on the wire W6. The negative-side system main relay 31 is disposed between the third fuse 30 and the contact point P7 on the wire W6, and switches on and off the first path 51, the second path 52, and the third path 53. The limiting resistor 32 and the pre-charge-side system main relay 33 are connected in parallel with the negative-side system main relay 31, and constitute a pre-charge circuit. The limiting resistor 32 and the pre-charge-side system main relay 33 that constitute the pre-charge circuit are connected in series. The AC fuse 34 is disposed between the positive-side system sub-relay 35 and the contact point P2 on the wire W10. The positive-side system sub-relay 35 is disposed between the AC fuse 34 and the positive sides of the DC-DC converter 62 and the OBC 63 on the wire W10, and switches between connection to and disconnection from the 2-in-1 charger 60. The fourth DC relay 36 is disposed between the contact point P9 and the contact point P6 on the wire W7, and switches between connection to and disconnection from the DC inlet 68. The fifth DC relay 37 is disposed between the contact point P1 and the contact point P8 on the wire W1, and switches between connection to and disconnection from the DC inlet 68. The voltage sensor 38 is disposed between the wire W1 and the wire W7, and measures a voltage between the wire W1 and the wire W7.

As shown in FIGS. 2 to 4, the junction block 20 according to the present embodiment includes the positive-side system main relay 21, the wire W10, the positive-side system sub-relay 35, the negative-side system main relay 31, and the wire W11. The positive-side system main relay 21 is provided in the second path 52 at a position closer to the motor 40 than a branching point (contact point P2 in this example) between the first path 51 and the second path 52. The wire W10 connects a point between the positive side of the first battery 11 and the positive-side system main relay 21 (contact point P2 in this example) to the positive side of the DC-DC converter 62 and the positive side of the OBC 63, and is isolated from the charging path of the DC inlet 68. The positive-side system sub-relay 35 is provided on the wire W10. The negative-side system main relay 31 is provided in a portion where the first path 51, the second path 52, and the third path 53 overlap, and is adapted for switching between connection and disconnection of the charging path of the DC inlet 68. The wire W11 connects the downstream side (contact point P7 in this example) of the negative-side system main relay 31 to the negative side of the DC-DC converter 62 and the negative side of the OBC 63.

In other words, according to the present embodiment, the positive side of the 2-in-1 charger 60 branches off at a point (contact point P2) upstream of the positive-side system main relay 21, and the negative side of the 2-in-1 charger 60 is connected to a point (contact point P7) downstream of the negative-side system main relay 31. Accordingly, by providing the positive-side system sub-relay 35, namely the single-polarity (positive-side) sub-relay, in the wire W10, voltage can be applied to the path used for charging from an AC power supply or charging from a solar panel. In other words, allowing the negative-side system main relay 31 to serve the function of a negative-side system sub-relay corresponding to the positive-side system sub-relay 35 can eliminate the need for a negative-side system sub-relay. The negative-side system main relay 31 is shared between AC charging etc. and DC charging using the DC inlet 68. This makes it possible to support AC charging etc. while reducing power consumption.

If the positive-side system main relay 21 is caused to serve the function of the positive-side system sub-relay 35, that is, if the positive-side system sub-relay 35 is eliminated, the number of activations of the positive-side system main relay 21 increases during AC charging etc. resulting in reduced efficiency and increased heat dissipation cost for the junction block 20. In addition, if the wire W10 is connected to a point downstream of the positive-side system main relay 21, the number of relays to be operated during AC charging etc. increases, resulting in reduced efficiency. Furthermore, if the positive-side system main relay 21 is used in place of the negative-side system main relay 31, the number of relays to be operated during AC charging etc. increases. Moreover, since a pre-charge circuit is not connected to the positive-side system main relay 21, the capacitors included in the 2-in-1 charger 60 (primary-side capacitors of the DC-DC converter 62 and the OBC 63) undergo pre-charging.

According to the present embodiment, as described above, the positive side of the 2-in-1 charger 60 branches off at a point (contact point P2) upstream of the positive-side system main relay 21, and the negative side of the 2-in-1 charger 60 is connected to a point (contact point P7) downstream of the negative-side system main relay 31. As a result, pre-charging of the capacitors included in the 2-in-1 charger 60 (the primary-side capacitors of the DC-DC converter 62 and the OBC 63) can be performed using the pre-charge circuit connected to the negative-side system main relay 31. In addition, the DC-DC converter 62 does not employ a bidirectional configuration, which reduces the load on the positive-side system sub-relay 35.

If the negative side of the 2-in-1 charger 60 is connected to a point upstream of the negative-side system main relay 31, the high-voltage second battery 12 would remain constantly connected to the 2-in-1 charger 60. As a result, for example, if the connector of the 2-in-1 charger 60 is damaged in a collision and a leakage current occurs, there is a risk that the insulation of the second battery 12 may also deteriorate. In contrast, according to the present embodiment, the negative side of the 2-in-1 charger 60 is connected to a point downstream of the negative-side system main relay 31. Therefore, the second battery 12 can be disconnected by the negative-side system main relay 31.

FIG. 5 shows an example of a drive sequence for pre-charging capacitors of the DC-DC converter 62 according to the embodiment. In FIG. 5, IB represents current, and VH represents voltage. As shown in FIG. 5, when pre-charging the capacitors of the DC-DC converter 62, it is desirable to first close the negative-side system main relay 31 and then close the positive-side system sub-relay 35. When the positive-side system sub-relay 35 is closed, an electrical load corresponding to an inrush current generated at this time is applied to the contacts of the positive-side system sub-relay 35, which may affect the relay's service life. However, by closing the negative-side system main relay 31 before the positive-side system sub-relay 35, the electrical load at the time of activation of the positive-side system sub-relay 35 is less likely to be applied to its contacts.

As described above, according to the present embodiment, it is possible to support AC charging etc. while reducing power consumption in a vehicle equipped with a plurality of batteries.

The technical scope of the present disclosure is not limited to the scope described in the above embodiment. Various modifications and improvements may be made to the above embodiment without departing from the spirit and scope of the disclosure, and embodiments with such modifications or improvements are also included in the technical scope of the present disclosure.

## Claims

1. A vehicle connection circuit (20) that is interposed between a first battery (11) and a second battery (12), both provided in a vehicle (200) and connectable to each other, and a DC charger (68), a DC-DC converter (62), an on-board charger (63), and a motor (40), and that is configured to electrically connect the first battery (11), the second battery (12), and the motor (40), the vehicle connection circuit comprising:
a first path (51) configured to charge the first battery (11) from either or both of the DC-DC converter (62) and the on-board charger (63);
a second path (52) configured to charge the second battery (12) from either or both of the DC-DC (62) converter and the on-board charger (63);
a third path (53) configured to charge the first battery (11) and the second battery (12) from either or both of the DC-DC converter (62) and the on-board charger (63);
a first system relay (21) provided in the second path (52) at a position closer to the motor (40) than a branching point between the first path (51) and the second path (52);
a positive-side wire (W10) that connects a point between a positive side of the first battery (11) and the first system relay (21) to a positive side of the DC-DC converter (62) and a positive side of the on-board charger (63), and that is isolated from a charging path of the DC charger (68);
a second system relay (35) provided on the positive-side wire (W10);
a third system relay (31) provided in a portion where the first path (51), the second path (52), and the third path (53) overlap, and adapted for switching between connection and disconnection of the charging path of the DC charger (68); and
a negative-side wire (W11) that connects a downstream side of the third system relay (31) to a negative side of the DC-DC converter (62) and a negative side of the on-board charger (63).

2. The vehicle connection circuit (20) according to claim 1, further comprising a pre-charge circuit connected in parallel with the third system relay,
wherein the pre-charge circuit includes a limiting resistor (32) and a fourth system relay (33) connected in series.

3. The vehicle connection circuit (20) according to claim 1, wherein:
the DC-DC converter (62) is connected to a solar panel (64); and
the on-board charger (63) is connected to a wiring plug connector (66).

4. A vehicle connection method using the vehicle connection circuit according to any one of claims 1 to 3, the vehicle connection method comprising closing the third system relay (31) and subsequently closing the second system relay (35).

5. A vehicle battery structure (100) comprising:
a first battery (11);
a second battery (12) that is connectable to the first battery (11); and
the vehicle connection circuit (20) according to any one of claims 1 to 3 that is interposed between the first battery (11) and the second battery (12), and the DC charger (68), the DC-DC converter (62), the on-board charger (63), and the motor (40), and that is configured to electrically connect the first battery (11), the second battery (12), and the motor (40).
